(19) **Europäisches Patentamt European Patent Office Office européen des brevets**

(11) **EP 2 235 111 B1**

(12) **EUROPEAN PATENT SPECIFICATION**

| | |
|---|---|
| (45) Date of publication and mention of the grant of the patent: **07.12.2011 Bulletin 2011/49** | (51) Int Cl.: **C08L 101/00** (2006.01)  **C08L 27/12** (2006.01) **B29C 47/00** (2006.01)  **C08L 23/08** (2006.01) |
| (21) Application number: **09703563.8** | (86) International application number: **PCT/US2009/031487** |
| (22) Date of filing: **21.01.2009** | (87) International publication number: **WO 2009/094348 (30.07.2009 Gazette 2009/31)** |

(54) **PROCESSING AID COMPOSITIONS COMPRISING FLUOROPOLYMERS HAVING LONG-CHAIN BRANCHES**

ZUSAMMENSETZUNGEN MIT FLUORPOLYMEREN MIT LANGKETTIGEN VERZWEIGUNGEN ALS VERARBEITUNGSHILFE

COMPOSITIONS D'ADJUVANT DE FABRICATION COMPRENANT DES POLYMÈRES FLUORÉS AYANT DES RAMIFICATIONS À LONGUE CHAÎNE

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **23.01.2008 GB 0801194**

(43) Date of publication of application:
**06.10.2010 Bulletin 2010/40**

(73) Proprietor: **3M Innovative Properties Company Saint Paul, MN 55133-3427 (US)**

(72) Inventors:
• **LAVALLEE, Claude, Saint Paul, Minnesota 55133-3427 (US)**
• **KASPAR, Harald, 84504 Burgkirchen (DE)**
• **HINTZER, Klaus, 84504 Burgkirchen (DE)**

(74) Representative: **Kurz, Arnd 3M ESPE AG 3M Office of Intellectual Property Counsel Espe Platz 82229 Seefeld (DE)**

(56) References cited:
**WO-A-2004/111124      WO-A-2007/102963 WO-A-2008/140914      GB-A- 1 571 356**

• **DATABASE WPI Week 200231 Thomson Scientific, London, GB; AN 2002-263159 XP002523112 & JP 2002 012626 A (ASAHI GLASS CO LTD) 15 January 2002 (2002-01-15)**

**EP 2 235 111 B1**

**Description**

1. Field

The present invention relates to fluoropolymers suitable as processing aids for melt-processing melt-processable non-fluorinated polymers.

Provided are fluoropolymers that may be used as a processing aid for melt-processing non-fluorinated melt-processable polymers. Also provided are compositions comprising the fluoropolymers and the non-fluorinated melt proccessable fluoropolymers. These compositions may be a processing aid or a composition ready to be processed into a desired article such as for example a polymer film.

2. Background

For any melt-processable thermoplastic polymer composition, there exists a critical shear rate above which the surface of the extrudate becomes rough and below which the extrudate will be smooth. See, for example, R. F. Westover, Melt Extrusion, Encyclopedia of Polymer Science and Technology, vol. 8, pp. 573-81 (John Wiley & Sons 1968). The desire for a smooth extrudate surface competes, and must be optimized with respect to, the economic advantages of extruding a polymer composition at the fastest possible speed (for example at high shear rates).

Some of the various types of extrudate roughness and distortion observed in high and low density polyethylenes are described by A. Rudin, et al., Fluorocarbon Elastomer Aids Polyolefin Extrusion, Plastics Engineering, Mar. 1986, pp. 63-66. The authors state that for a given set of processing conditions and die geometry, a critical shear stress exists above which polyolefins such as linear low-density polyethylene (LLDPE), high-density polyethylene (HDPE), and polypropylene suffer melt defects. At low shear rates, defects may take the form of "sharkskin", a loss of surface gloss that in more serious manifestations appears as ridges running more or less transverse to the extrusion direction.

At higher rates, the extrudate can undergo "continuous melt fracture" becoming grossly distorted. At rates lower than those at which continuous melt fracture is first observed, LLDPE and HDPE can also suffer from "cyclic melt fracture", in which the extrudate surface varies from smooth to rough. The authors state further that lowering the shear stress by adjusting the processing conditions or changing the die configuration can avoid these defects to a limited extent, but not without creating an entirely new set of problems. For example, extrusion at a higher temperature can result in weaker bubble walls in blown film extrusion, and a wider die gap can affect film orientation.

There are other problems often encountered during the extrusion of thermoplastic polymers. They include a build up of the polymer at the orifice of the die (known as die build up or die drool), increase in back pressure during extrusion runs, and excessive degradation or low melt strength of the polymer due to high extrusion temperatures. These problems slow the extrusion process either because the process must be stopped to clean the equipment or because the process must be run at a lower speed.

The above described problems do not only occur when using polyethylene but have also been observed when melt-extruding other thermoplastic polymers.

It has long been known that the addition of fluoropolymers can at least partially alleviate melt defects in extrudable thermoplastic hydrocarbon polymers and can be used as processing aid, such as described, for example, in US Pat Nos. 5,015,693 and 4,855,013 to Duchesne and Jonson, 5,701,217 to Blong et al., 6,277,919 to Dillon et al.

Despite the many existing processing aids based on fluoropolymers as known in the art, differences still also exist in the efficiency of the processing aids, for example with respect of the time upon the addition of the processing aid at which melt-fracture reduction of elimination can be achieved. For example, WO2002/066544 reports that processing aids having Mooney viscosities between 60-80 are more efficient than the process aids outside of that window. However, fluoropolymers having high Mooney viscosities (for example, Mooney 1 +10 @121°C from 60 to 80) tend to poorly disperse in the host polymer leading to the formation of gels. This in turn, may lead to bubble-like defects on the extruded polymer.

International patent application WO2004/111124 in the name of Amos et al. describes that fluoropolymers containing long-chain branches are particular suitable as processing aids. Those fluoropolymers are prepared by using modifiers during the polymerization reaction. Modifiers described in WO2004/111124 are bisolefins or halogen containing monoolefins. Although, good results have been obtained when using these fluoropolymers as processing aids, preparing these fluoropolymers is cumbersome since the polymers are prone to partial degradation during their purification and or work-up (down-stream) processes. These types of fluoropolymers are most conveniently prepared by emulsion polymerization. During the work-up (down-stream) processing steps heat may be either directly applied to the polymer or generated by individual processing steps. It has been observed that subjecting the fluoropolymers to heat during these processing steps, partial degradation processes may be initiated. Therefore, considerable care has to be taken to prevent partial degradation from taking place and to ensure continuous high quality of the products. This makes the process less cost-effective.

Therefore, there is also a need of providing fluoropolymers having good properties as processing aids and being robust enough to withstand standard purification and work-up (down stream) processes. Desirably, the fluoropolymers are not (or less) prone to partial thermal degradation. Desirably, such processing aids are highly effective in reducing melt defects in the processing, in particular extrusion, of non-fluorinated melt-processable polymers. Preferably, the processing aid is capable of reducing die drool and/or reducing the back pressure during extrusion of the non-fluorinated polymer. Additionally, the processing agent is robust enough to withstand application of elevated temperatures during purification and/or work-up (down stream) processing conditions without degradation or at least reduced degradation. Furthermore, it is desirable to provide a processing aid that performs well at Mooney viscosities ML 1+10 @ 121°C of from 30 to 90, preferably from about 60 to about 90. Such processing aids desirably are effective in reducing melt defects shortly after addition of the processing aids to the melt-extrusion, and preferably also reduce or prevent gel-formation and/or the formation of bubbles or bubble-like effects.

3. Summary

In the following there is provided a polymer composition comprising at least one non-fluorinated polymer that is suitable for melt-processing and at least one fluorinated polymer that is suitable for melt-processing, wherein the fluorinated polymer is obtainable by polymerizing one or more fluorinated monoolefin monomers in the presence of one or more fluorinated bisolefinic ethers of the general formula

$$CR_1R_2=CF-O-Rf_1-O-CF=CR_3R_4 \qquad (I),$$

$$CR_1R_2=CF-CF_2-O-Rf_1-O-CF_2-CF=CR_3R_4 \qquad (II),$$

or

$$CR_1R_2=CF-CF_2-O-Rf_1-O-CF=CR_3R_4 \qquad (III)$$

wherein

$R_1$, $R_2$, $R_3$ and $R_4$ are independently from each other F, H, alkyl, alkoxy, polyoxy alkyl, perfluoroalkyl, perfluoroalkoxy or perfluoropolyoxy alkyl;
$Rf_1$ represents a residue selected from the group consisting of perfluoroalkyl, perfluoroalkoxy or perfluoropolyoxy alkyl or a residue according to $Rf_2$; and
$Rf_2$ represents a non-fluorinated, a fluorinated or a perfluorinated aryl.

In another aspect there is provided a method for making a melt-processable polymer composition by blending (a) a non-fluorinated melt processable polymer and (b) a fluorinated polymer as described above.
In a further aspect there is provided a method for melt-extruding a non-fluorinated melt-processable polymer by adding to the polymer a fluorinated polymer as described above, wherein the fluorinated polymer is added to the non-fluorinated polymer prior or during the melt extrusion.
Furthermore, there is provided the use of a fluorinated polymer as described above as an additive in the melt-extrusion of a melt-processable non-fluorinated polymer.
Additionally, there is provided an article containing the fluorinated polymer described above and at least one non-fluorinated polymer wherein the article is selected from the group consisting of melt-extruded articles, blow-molded articles or injection-molded articles.
The presence of the bisolefinic polyether (so-called 'modifiers') during the polymerization leads to the formation of a non-linear chain topography of the resulting fluoropolymers. The resulting fluoropolymers have long-chain-branches as can be determined by measuring the long-chain branch indexes as described below. It was found that such fluoropolymers are highly effective polymer processing aids in reducing the occurrence of melt defects such as shark skin and melt fracture. In particular, these processing aids generally clear the melt of the non-fluorinated melt-processable polymer faster than similar fluoropolymers that are linear or have a long chain branching index of less than 0.2. Thus, the elapsed time after the extruder start up in which extruded articles exhibit a high degree of melt fracture before obtaining an extrudate having a smooth surface, free of melt fracture, may be reduced. Also, less fluoropolymer processing aid may be needed to reduce the melt defects and/or to reduce the time for clearance of the melt.
Moreover, the fluoropolymer may also reduce the back pressure in the extrusion of the non-fluorinated melt-processable polymer.
It was further found that when preparing these fluoropolymers they can be submitted to purification or down-stream process steps where the polymers or parts of the polymers are exposed to elevated temperatures without any substantial decomposition or release of degradation products.

Additionally, it has been found that when using the fluorinated bisolefinic ethers provided herein as modifiers, fluoropolymers with high Mooney viscosities (e.g. a ML 10 +1 @ 121°C of from about 60 to about 90) may be obtained which perform as well or even better with respect to reducing met fracture than similar fluoropolymers with similar Mooney viscosities and a linear chain topography, i.e. polymers prepared without modifiers capable of introducing long-chain branched polymer structures.

### 4. Detailed Description

The term "fluoropolymer" denotes a "fluorinated" polymer. By the term "fluorinated" is meant that the polymer or a compound contains fluorine atoms. A fluoropolymer or a fluorinated polymer is a polymer comprising repeating units containing at least carbon and fluorine atoms.

The fluorinated polymer may be partially fluorinated. Such a polymer typically comprises repeating units containing at least carbon, fluorine and hydrogen atoms.

The fluorinated polymer may also be a fully fluorinated (perfluorinated) polymer. Such a polymer typically comprises repeating units containing at least carbon, fluorine but no hydrogen atoms.

Both partially and perfluorinated polymers may further contain repeating units comprising one or more oxygen atoms and/or one or more nitrogen atoms.

By the term "melt-processable" or "suitable for melt-processing" is meant that the respective polymer or composition can be processed in commonly used melt-processing equipment such as, for example, an extruder. For example, a melt processable polymer may typically have a melt flow index of 5g/10 minutes or less, preferably 2g/10 minutes or less (measured according to ASTMD1238 at 190°C, using a 2160g weight) but still more than 0.2g/10 minutes.

A melt-processable polymer may also have a melt flow index (MFI 265/5) of 20g/10 min or less or 12 g/min or less but greater than 0.2g/10min.

### Fluoropolymers:

The fluoropolymers provided herein are non-linear polymers, i. e. branched polymers. The level of branching or non-linearity can be characterized through the long chain branching index (LCBI). The LCBI can be determined as described in R. N. Shroff, H. Mavridis; Macromol., 32, 8454-8464 (1999) & 34, 7362-7367 (2001) according to the equation:

$$LCBI = \frac{\eta_{0.br.}^{1/a}}{[\eta]_{br.}} \cdot \frac{1}{k^{1/a}} - 1 \qquad \text{eq. 1}$$

In the above equation, $\eta_{0,br}$ is the zero shear viscosity (units Pa*s) of the branched fluoropolymer measured at a temperature T and $[\eta]_{br}$, is the intrinsic viscosity (units ml/g) of the branched fluoropolymer at a temperature T in a solvent in which the branched fluoropolymer can be dissolved and a and k are constants. These constants are determined from the following equation:

$$\eta_{0.lin} = k \cdot [\eta]_{lin.}^{a} \qquad \text{eq. 2}$$

wherein $\eta_{0.lin}$ and $[\eta]_{lin}$ represent respectively the zero shear viscosity and intrinsic viscosity of the corresponding linear fluoropolymer measured at the respective same temperatures T and T' and in the same solvent. Thus, the LCBI is independent of the selection of the measurement temperatures and solvent chosen, provided, of course, that the same solvent and temperatures are used in equations 1 and 2. The LCBI of the fluoropolymer may, for instance, have a value of at least 0.2. The LCBI of the fluoropolymer may be at least 0.2, at least 0.3, or even at least 0.4. The LCBI may be less than 5, less than 2.0 or less than 1.0. Generally, the LCBI may be from 0.2 up to 5, for instance from 0.2 to 2.0.

Generally, the effectiveness of the fluoropolymer to decrease melt defects will increase with increasing value of the LCBI for polymers having similar zero shear rate viscosities. However, when the level of branching (and thus the LCBI value) becomes too large, the fluoropolymer may have a gel fraction that cannot be dissolved in an organic solvent. At such high levels of branching, the advantageous effects of the fluoropolymer on the processing of the melt-processable polymer composition may be reduced as the melt viscosity of the fluoropolymer may be too high. One skilled in the art through routine experimentation may readily determine the appropriate value of LCBI.

An alternative method for determining the presence of long chain branches relies on the calculation of critical relaxation coefficients. This method is particularly suitable for insoluble polymers. As disclosed by Wood-Adams et al. (Macromolecules 2000, 33, No.20, 7489-7499), when plotting the phase angle $\delta$ *versus* the measurement frequency $\omega$, polymers having long chain branches exhibit a plateau or additional curvature in the function of $\delta(\omega)$ while linear polymers do not. When the polymer is linear the resulting plot only has a single curvature (compare Stange et al., Macromolecules 2007, 40, 2409-2416, figure 6 where the phase angle was plotted *versus* the shear modulus instead of the angular frequency ($\omega$) but a similar curve is obtained when plotting the phase angle ($\delta$) *versus* the angular frequency ($\omega$)). The critical relaxation exponent n can be obtained by dividing the phase angle at gel point ($\delta_c$) by 90°, i.e. $n = \delta_c/90°$. The phase angle at gel point ($\delta_c$) is the angle at which, in case of long chain branches being present, the $\delta(\omega)$-function plateaus or forms a second curvature, i.e. where the first derivative of the plot has its maximum and/or where the 2nd derivative passes zero. According to Garcia-Franco et al. (Macromolecules 2001, 34, No.10, 3115-3117), the plateau in the afore-mentioned $\delta(\omega)$-function will shift to lower phase angles $\delta$ when the amount of LCBs in the polymer increases. The closer *n* is to 1, the fewer long chain branches are present. The critical relaxation exponent *n* for the fluoropolymers disclosed herein typically is less than 1 and more than 0. Generally, *n* will be between 0.3 and 0.92, preferably between 0.35 and 0.85.

The fluoropolymers for use in the melt-processable polymer composition may be amorphous, i.e. they have no melting point or they can be crystalline or semicrystalline fluoropolymers, i.e. polymers that have a melting point.

The fluorinated polymers are melt-processable. This means the polymers have an appropriate melt-viscosity that they can be melt-extruded at the temperatures applied for melt-processing the non-fluorinated polymers. Melt-processing typically is performed at a temperature from 180°C to 280°C, although optimum operating temperatures are selected depending upon the melting point, melt viscosity, and thermal stability of the polymer and also the type of extruder used.

Generally, the fluoropolymers may possess a zero shear rate viscosity of not more than $1.0 \times 10^7$ Pa*s at 265°C. Preferably, they have a zero shear viscosity at 265°C of between about $1.0 \times 10^3$ Pa*s and $5.0 \times 10^6$ Pa*s, more preferably between about $1.0 \times 10^4$ and about $1.5 \times 10^6$ Pa*s. This means the fluoropolymers are of comparatively low molecular weight. Although the zero shear rate viscosity is indicated as the viscosity at 265°C, this does not require it necessarily to be measured at 265°C. For example, for particular polymers it may be more suitable or necessary to measured it at a lower or higher temperature. The zero shear rate viscosity determined at a lower or higher temperatures can be converted or calculated to the value at 265°C through the use of the Arrhenius equation as described in for example by M. Pahl, W.Gleißle, H. Laun: "Praktische Rheologie der Kunststoffe und Elastomere", 4th edition, 1995, chapter 9, p256 et seq., VDI Verlag Düsseldorf.

Generally, the fluoropolymers may have a melt flow index (MFI 265/5) measured at 265°C and a support weight of 5 kg according to DIN EN ISO 1133 of greater than 0.2 g/10min, typically in the range 0.5 to 20g /10min.

Fluoropolymers for use in this invention include fluoropolymers that comprise interpolymerized units derived from at least one fluorinated, (partially fluorinated or perfluorinated) ethylenically unsaturated monomer, preferably two or more monomers, of the formula

$$RCF=CR_2 \qquad (IV)$$

wherein each R is independently selected from H, F, Cl, saturated alkyl or alkoxy of from 1 to 8 carbon atoms, aryl of from 1 to 8 carbon atoms, cyclic saturated alkyl of from 1 to 10 carbon atoms, or perfluoroallyl or perfluorovinyl of from 1 to 8 carbon atoms. The R group preferably contains from 1 to 3 carbon atoms. In this monomer each R group may be the same as each of the other R groups. Alternatively, each R group may be different from one or more of the other R groups.

The fluoropolymer may also comprise a copolymer derived from the interpolymerization of at least one formula (IV) monomer with at least one non-fluorinated, copolymerizable comonomer having the formula:

$$R^1_2C=CR^1_2 \qquad (V)$$

wherein $R^1$ is independently selected from H, Cl, or a saturated alkyl group of from I to 8 carbon atoms, a cyclic saturated alkyl group of from 1 to 10 carbon atoms, or an aryl group of from 1 to 8 carbon atoms. $R^1$ preferably contains from 1 to 3 carbon atoms.

Representative examples of useful fluorinated formula (IV) monomers include, but are not limited to, vinylidene fluoride, tetrafluoroethylene, hexafluoropropylene, chlorotrifluoroethylene, 2-chloropentafluoropropene, dichlorodifluoroethylene, 1,1-dichlorofluoroethylene, and mixtures thereof.

Perfluoro-1,3-dioxoles may also be used. Perfluoro-1,3-dioxole monomers and their copolymers are described in U. S. Pat. No. 4,558, 141 (Squires).

Representative examples of useful formula (V) monomers include ethylene and propylene.

Particular examples of suitable fluoropolymers include polyvinylidene fluoride, fluoropolymers derived from the interpolymerization of two or more different formula (IV) monomers and fluoropolymers derived from one or more formula (IV) monomers with one or more formula (V) monomers. Examples of such polymers are those having interpolymerized units derived from vinylidene fluoride (VDF) and hexafluoropropylene (HFP) and those derived from tetrafluoroethylene (TFE) and at least 5 weight % of at least one copolymerizable comonomer other than TFE. This latter class of fluoropolymers includes polymers of interpolymerized units derived from TFE and HFP; polymers of interpolymerized units derived from TFE, HFP and VDF; polymers of interpolymerized units derived from TFE, HFP and a formula (V) monomer; and polymers derived from interpolymerized units derived from TFE and a formula (V) monomer.

<u>Modifiers for long chain branching:</u>

Long-chain branching of the fluoropolymers may be obtained through the polymerization process to make the fluoropolymers. The long-chain branched fluoropolymers are obtained by copolymerizing one or more fluorinated monomers and optional non-fluorinated comonomers with one or more modifiers that causes long chain branches to be formed during polymerization. Such modifiers are fluorinated, preferably perfluorinated, bisolefinic ethers selected from diallyl ethers, divinyl ethers and allylvinyl ethers. Generally, the modifiers are of the general formula

$$CR_1R_2=CF-O-Rf_1-O-CF=CR_3R_4 \qquad (I),$$

$$CR_1R_2=CF-CF_2-O-Rf_1-O-CF_2-CF=CR_3R_4 \qquad (II),$$

or

$$CR_1R_2=CF-CF_2-O-Rf_1-O-CF=CR_3R_4 \qquad (III)$$

wherein

$R_1$, $R_2$, $R_3$ and $R_4$ are independently from each other F, H, alkyl, alkoxy, polyoxy alkyl, perfluoroalkyl, perfluoroalkoxy or perfluoropolyoxy alkyl;
Preferably, $R_1$, $R_2$, $R_3$, and $R_4$ are, independently from each other, F, $CF_3$, $C_2F_5$, $C_3F_7$, $C_4F_9$, H, $CH_3$, $C_2H_5$, $C_3H_7$, $C_4H_9$, preferably F.

$Rf_1$ represents a residue selected from linear or branched perfluoroalkyl, perfluoroalkoxy or perfluoropolyoxyalkyl residues or a residue according to $Rf_2$. Preferably, $Rf_1$ contains from 1 to 12, more preferably from 1 to 10 carbon atoms, more preferably $Rf_1$ is a perfluoroalkyl residue having from 1 to 12, or from 2 to 10 or from 3 to 8 carbon atoms.
$Rf_2$ is a non-fluorinated, a fluorinated or a perfluorinated aryl. The aryl may be non-substituted or substituted with one or more halogens other than F, perfluorinated alkyl residues, perfluorinated alkoxy residues, perfluorinated polyoxy alkyl residues, fluorinated, perfluorinated or non-fluorinated phenyl or phenoxy moieties or combinations thereof, wherein the phenyl or phenoxy residues may be non-substituted or substituted with one or more perfluorinated alkyl, alkoxy or polyoxy alkyl residue or one or more halogens other than F or combinations thereof. Preferably, $Rf_2$ contains from 1 to 14 carbon atoms, more preferably from 1 to 12, most preferably from 1 to 10 carbon atoms.
Preferably, the modifiers are perfluorinated. More preferably, the modifiers are perfluorinated and aliphatic.
Examples of bisolefinic ethers according to formula (I) include but are not limited to:

$$CF_2=CF-O-Rf_1-O-CF=CF_2, \text{ and } CF_2=CF-O-Rf_2-O-CF=CF_2.$$

Examples of bisolefinic ethers according to formula (II) include but are not limited to:

$$CF_2=CF-CF_2-O-Rf_1-O-CF_2-CF=CF_2, CF_2=CF-CF_2-O-Rf_2-O-CF_2-CF=CF_2-$$

Typical examples of $Rf_1$ include but are not limited to:

$$CF_2, (CF_2)_n \text{ with n being 2, 3, 4, 5, 6, 7 or 8}, CF_2-O-CF_2 \ CF_2-O-CF_2-CF_2.$$

$$CF(CF_3), (CF_2)_2-O-CF(CF_3)-CF_2, CF(CF_3)-CF_2-O-CF(CF_3),$$

and

$$(CF_2)_2-O-CF(CF_3)-CF_2-O-CF(CF_3)-CF_2-O-CF_2.$$

Typical examples of $Rf_2$ include but are not limited to phenyl-, mono-, di-, tri- or tetrafluoro-phenyl residues with the olefinic residues being linked via the ortho, para or meta position. Other typical examples of $Rf_2$ include fluorinated, perfluorinated or non-fluorinated phenoxyphenyl residues or fluorinated, non-fluorinated or perfluorinated (1,1 - ditrifluoromethyl benzyl) phenyl residues. These residues may also be substituted. Typical substituents include non-fluorinated, fluorinated or perfluorinated phenyl or phenoxy residues or perfluorinated alkyl (e.g. $-CF_3$, $-CF_2CF_3$ etc groups) or perfluorinated alkoxy (e.g. $-O-CF_3$, $-O-CF_2-CF_3$) or polyoxyalkyl groups or $-O-CF_2-O-CF_3$, $-CF_2-O-CF_2-O-CF_3$ etc groups).

The modifiers may be prepared according to known methods, for example those described in US Pat. Nos 4,273,728 (to C. Krespan), 3,326,984 (Anderson et al.) or EP application No. 0 976 706 (Navarrini et al), are commercially available from Anles, St. Petersburg, Russia.

The aforementioned modifiers should generally be used at fairly low levels to avoid too extensive branching to occur during the polymerization. The amount of modifier that is typically used in the polymerization to cause a desired amount of branching of the fluoropolymer depends on the nature of the modifier used and on the polymerization conditions such as e. g. reaction time and temperature. The amount of modifier to be used is selected such that the desires LCBI value is attained. The optimal amount of modifier can be readily determined by one skilled in the art through routine experimentation but is generally not more than 1 % by weight and for example not more than 0.7% or 0.5% by weight based on the total weight of monomers fed to the polymerization. A useful amount may be from 0. 01 % to 1 % by weight, conveniently from 0.02 to 0.5 % by weight, alternatively 0.01 to 0.3 % by weight or from 0.05 % to 0.25 % by weight. The modifier can be added at the start of the polymerization and/or may be added during the polymerization in a continuous way and/or portion-wise. Preferably, the modifier is continuously fed to the polymerization.

Preparation of the fluoropolymers:

The fluoropolymers for use as processing aids can be obtained with any of the known polymerization techniques including solution polymerization, suspension polymerization and polymerization in super critical media, such as, for example super critical $CO_2$. The fluoropolymers are preferably made through an aqueous emulsion polymerization process, which can be conducted in a known manner including batch, semi-batch or continuous polymerization techniques. The reactor vessel for use in the aqueous emulsion polymerization process is typically a pressurizable vessel capable of withstanding the internal pressures during the polymerization reaction. Typically, the reaction vessel will include a mechanical agitator, which will produce thorough mixing of the reactor contents and heat exchange system.

Any quantity of the fluoromonomer (s) may be charged to the reactor vessel. The monomers may be charged batchwise or in a continuous or semicontinuous manner. By semi-continuous is meant that a plurality of batches of the monomer are charged to the vessel during the course of the polymerization. The independent rate at which the monomers are added to the kettle will depend on the consumption rate of the particular monomer with time. Preferably, the rate of addition of monomer will equal the rate of consumption of monomer, i.e. conversion of monomer into polymer. The reaction kettle is charged with water, the amounts of which are not critical. To the aqueous phase there is generally also added a fluorinated surfactant, typically a non-telogenic fluorinated surfactant although aqueous emulsion polymerization without the addition of fluorinated surfactant may also be practiced. When used, the fluorinated surfactant is typically used in amount of 0.01% by weight to 1% by weight. Suitable fluorinated, surfactants include any fluorinated surfactant commonly employed in aqueous emulsion polymerization.

Particularly preferred fluorinated surfactants are those that correspond to the general formula:

$$Y-Rf-Z-M$$

wherein Y represents hydrogen, Cl or F; Rf represents a linear or branched perfluorinated alkylene having 4 to 10 carbon atoms; Z represents $COO^-$ or $SO_3^-$ and M represents an alkali metal ion or an ammonium ion. Most preferred fluorinated surfactants for use in this invention are the ammonium salts of perfluorooctanoic acid and perfluorooctane sulphonic acid. Mixtures of fluorinated surfactants can be used. Also suitable for use in the preparation of the polymers described herein are fluorinated surfactants of the general formula:

$$[R_f-O-L-COO^-]_iX_i^+$$

wherein L represents a linear partially or fully fluorinated alkylene group or an aliphatic hydrocarbon group, $R_f$ represents a linear partially or fully fluorinated aliphatic group or a linear partially or fully fluorinated group interrupted with one or more oxygen atoms, $Xi^+$ represents a cation having the valence i and i is 1, 2 and 3. Specific examples are described in US 2007/0015937 by Hintzer et al. Also suitable for use in the preparation of the polymers described herein are fluorinated polyether surfactants, such as described in EP application No. 1,189,953 by Hintzer et al.

A chain transfer agent may be used to control the molecular weight of the fluoropolymer so as to obtain the desired zero shear rate viscosity. Useful chain transfer agents include $C_2$-$C_6$ hydrocarbons such as ethane, alcohols, ethers, esters including aliphatic carboxylic acid esters and malonic esters, ketones and halocarbons. Particularly useful chain transfer agents are dialkylethers such as dimethyl ether and methyl tertiary butyl ether.

The polymerization is usually initiated after an initial charge of monomer by adding an initiator or initiator system to the aqueous phase. For example peroxides can be used as free radical initiators. Specific examples of peroxide initiators include, hydrogen peroxide, diacylperoxides such as diacetylperoxide, dipropionylperoxide, dibutyrylperoxide, dibenzoylperoxide, benzoylacetylperoxide, diglutaric acid peroxide and dilaurylperoxide, and further water soluble per-acids and water soluble salts thereof such as e. g. ammonium, sodium or potassium salts. Examples of per-acids include peracetic acid. Esters of the peracid can be used as well and examples thereof include tert-butylperoxyacetate and tert-butylperoxypivalate. A further class of initiators that can be used are water soluble azo-compounds. Suitable redox systems for use as initiators include for example a combination of peroxodisulphate and hydrogen sulphite or disulphite, a combination of thiosulphate and peroxodisulphate or a combination of peroxodisulphate and hydrazine. Further initiators that can be used are ammonium-alkali- or earth alkali salts of persulfates, permanganic or manganic acid or manganic acids. The amount of initiator employed is typically between 0.03 and 2 % by weight, preferably between 0.05 and 1% by weight based on the total weight of the polymerization mixture.

The full amount of initiator may be added at the start of the polymerization or the initiator can be added to the polymerization in a continuous way during the polymerization until a conversion of 70 to 80 %. One can also add part of the initiator at the start and the remainder in one or separate additional portions during the polymerization. Accelerators such as, for example, water-soluble salts of iron, copper and silver may preferably also be added.

During the initiation of the polymerization reaction, the sealed reactor kettle and its contents are conveniently pre-heated to the reaction temperature. Polymerization temperatures are from 20°C to 150°C, preferred from 30°C to 110°C and most preferred from 40°C to 100°C. The polymerization pressure is typically between 4 and 30 bar, in particular 8 to 20 bar. The aqueous emulsion polymerization system may further comprise auxiliaries, such as buffers and complex-formers.

The amount of polymer solids that can be obtained at the end of the polymerization is typically between 10% and 45% by weight, preferably between 20% and 40% by weight and the average particle size of the resulting fluoropolymer is typically between 50 nm and 500 nm. During work-up these particle sizes may be further increased to the final particle sizes by standard techniques (such as, e.g. agglomeration or melt-pelletizing).

Fluoropolymer compositions:

The fluoropolymers provided herein may be used as processing aids for facilitating or improving the quality of the extrusion of non-fluorinated polymers. They can be mixed with non-fluorinated polymers during the extrusion into polymer articles. They can also be provided as polymer compositions, so-called masterbatches, which may contain further components and/or one or more host polymers. Typically, masterbatches contain the fluorinated polymer dispersed in or blended with a host polymer, which typically is a non-fluorinated polymer. Masterbatches may also contain further ingredients, such as synergists, lubricants etc. The masterbatch may be a composition ready to be added to a non-fluorinated polymer for being extruded into a polymer article. The masterbatch may also be a composition that is ready for being directly processed into a polymer article without any further addition of non-fluorinated polymer.

The fluoropolymer compositions can be melt-processed (e.g. melt-extruded) at the temperatures applied. Melt-processing typically is performed at a temperature from 180°C to 280°C, although optimum operating temperatures are selected depending upon the melting point, melt viscosity, and thermal stability of the composition and also the type of melt-processing equipment used. Generally, the composition may have a melt-flow index (measured according to ASTM D1238 at 190°C, using a 2160 g weight) of 5.0g/10 minutes or less, preferably 2.0g/10 minutes or less. Generally the melt flow indexes are greater than 0.1 or greater than 0.2 g/10 min.

Such compositions may be mixed with further non-fluorinated polymer and/or further components to obtain a composition ready for processing into a polymer article. The composition may also contain all required ingredients and are ready for being extruded into a polymer article. The amount of fluoropolymer in these compositions is typically relatively low. The exact amount used may be varied depending upon whether the extrudable composition is to be extruded into its final form (e. g., a film) or whether it is to be used as a masterbatch or processing additive which is to be (further) diluted with additional host polymer before being extruded into its final form.

Generally, the fluoropolymer composition comprises from 0.002 to 50 weight percent of the fluoropolymer. If the fluoropolymer composition is a masterbatch or processing additive, the amount of fluoropolymer may vary between 2 to 50 weight percent of the composition. If the fluoropolymer composition is to be extruded into final form and is not further diluted by the addition of host polymer, it typically contains a lower concentration of fluoropolymer, e. g., 0.002 to 2 weight percent, and preferably 0.005 and 0.2 weight percent of the fluoropolymer composition. In any event, the upper concentration of fluoropolymer used is generally determined by economic limitations rather than by any adverse physical effect of the concentration of the fluoropolymer.

In a particular embodiment there is provided a fluoropolymer composition comprising a blend of at least two fluoropolymers that differ in their melt flow index and wherein at least one of the fluoropolymers has an LCBI of at least 0.2 and, preferably, a zero shear rate viscosity of not more than $10^7$ Pa*s at 265 °C. Thus, in a particular embodiment of this invention, a blend of fluoropolymers may be used in which one fluoropolymer component has a melt flow index (MFIA) and wherein a second fluoropolymer component has a melt flow index (MFIB) whereby MFIA is greater than MFIB, i. e. component A will have a higher molecular weight as component B. Generally, the ratio of MFIA : MFIB should be at least 2 : 1, typically from 5 : 1 to $10^6$ : 1 to to $10^3$ : 1. The weight ratio of component A to component B may vary widely and can be between 1 : 99 and 99 : 1.

In another embodiment, the melt-processable polymer composition (processing aid composition) may comprise a blend of one or more fluoropolymers having an LCBI of at least 0.2 and, preferably, a zero shear rate viscosity of not more than $1 \times 10^7$ Pa*s at 265°C with one or more fluoropolymers that are essentially linear, i.e., that have an LCBI of less than 0.2, for example less than 0.1.

The fluoropolymer composition may be used in the form of powders, pellets, granules of the desired particulate size or size distribution, or in any other extrudable form.

The fluoropolymer compositions may comprise fluoropolymers having average particles sizes (weight average) of greater than 50 nm, or greater than 500 nm or greater than 2 $\mu$m or even greater than 10 $\mu$m. In a typical embodiment the fluoropolymer may have an average particle size (weight average) or from 1 to 10 $\mu$m.

Non-fluorinated polymers (host polymers):

A wide variety of non-fluorinated polymers are useful as host polymers. Host polymers include, but are not limited to, hydrocarbon resins, polyamides (including but not limited to nylon 6, nylon 6/6, nylon 6/10, nylon 11 and nylon 12), polyester (including but not limited to poly (ethylene terephthalate) and poly (butylene terephthalate)), chlorinated polyethylene, polyvinyl resins such as polyvinylchoride, polyacrylates and polymethylacrylates, polycarbonates, polyketones, polyureas, polyimides, polyurethanes, polyolefins and polystyrenes. The non-fluorinated melt processable polymers may be selected from a variety of polymer types.

The non-fluorinated polymers host polymers are melt-processable. Typically, the polymers, including hydrocarbon polymers, have melt flow indexes (measured according to ASTM D1238 at 190°C, using a 2160 g weight) of 5.0g/10 minutes or less, preferably 2.0g/10 minutes. Generally the melt flow indexes are greater than 0.1 or 0.2 g/10 min.

A particularly useful class of host polymers are hydrocarbon polymers, in particular, polyolefins. Representative examples of useful polyolefins are polyethylene, polypropylene, poly (1-butene), poly (3-methylbutene), poly (4-methylpentene) and copolymers of ethylene with propylene, 1-butene, 1-hexene, 1-octene, 1-decene, 4-methyl-1-pentene, and 1-octadecene.

Representative blends of useful polyolefins include blends of polyethylene and polypropylene, linear or branched low-density polyethylenes (e.g. those having a density of from 0.89 to 0.94g/cm$^3$), high-density polyethylenes (metallocene-catalyzed or not metallocene-catalyzed), including those having a density of e.g. from 0.94 to about 0.98 g/cm$^3$, and polyethylene and olefin copolymers containing said copolymerizable monomers, some of which are described below, e.g., ethylene and acrylic acid copolymers; ethylene and methyl acrylate copolymers; ethylene and ethyl acrylate copolymers; ethylene and vinyl acetate copolymers; ethylene, acrylic acid, and ethyl acrylate copolymers; and ethylene, acrylic acid, and vinyl acetate copolymers.

The polyolefins may be obtained by the homopolymerization or copolymerization of olefins, as well as copolymers of one or more olefins and up to 30 weight percent or more, but preferably 20 weight percent or less, of one or more monomers that are copolymerizable with such olefins, e. g. vinyl ester compounds such as vinyl acetate. The olefins may be characterized by the general structure $CH_2$=CHR, wherein R is a hydrogen or an alkyl radical, and generally, the alkyl radical contains not more than 10 carbon atoms, preferably from one to six carbon atoms. Representative olefins are ethylene, propylene, 1-butene, 1-hexene, 4-methyl-1-pentene, and 1-octene. Representative monomers that are copolymerizable with the olefins include: vinyl ester monomers such as vinyl acetate, vinyl propionate, vinyl butyrate, vinyl chloroacetate, and vinyl chloropropionate; acrylic and alpha-alkyl acrylic acid monomers and their alkyl esters, amides, and nitriles such as acrylic acid, methacrylic acid, ethacrylic acid, methyl acrylate, ethyl acrylate, N,N-dimethyl acrylamide, methacrylamide, and acrylonitrile; vinyl aryl monomers such as styrene, o-methoxystyrene, p-methoxystyrene, and vinyl naphthalene; vinyl and vinylidene halide monomers such as vinyl chloride, vinylidene chloride, and vinylidene bromide; alkyl ester monomers of maleic and fumaric acid and anhydrides thereof such as dimethyl maleate, diethyl maleate, and maleic anhydride; vinyl alkyl ether monomers such as vinyl methyl ether, vinyl ethyl ether, vinyl isobutyl ether, and 2-chloroethyl vinyl ether; vinyl pyridine monomers; N-vinyl carbazole monomers; and N-vinyl pyrolidine monomers.

Useful host polymers also include the metallic salts of the olefin copolymers, or blends thereof, that contain free carboxylic acid groups. Illustrative of the metals that can be used to provide the salts of said carboxylic acids polymers are the one, two, and three valence metals such as sodium, lithium, potassium, calcium, magnesium, aluminum, barium, zinc, zirconium, beryllium, iron, nickel, and cobalt.

Useful host polymers also include blends of various thermoplastic polymers and blends thereof containing conventional adjuvants such as antioxidants, light stabilizers, fillers, antiblocking agents, and pigments.

The host polymers may be used in the form of powders, pellets, granules, or in any other extrudable form. The most preferred olefin polymers useful in the invention are hydrocarbon polymers such as homopolymers of ethylene and propylene or copolymers of ethylene and 1-butene, 1-hexene, 1-octene, 4-methyl-1-pentene, propylene, vinyl acetate and methyl acrylate. The melt processable composition of the invention can be prepared by any of a variety of ways. For example, the host polymer and the fluoropolymer can be combined together by any of the blending means usually employed in the plastics industry, such as with a compounding mill, a Banbury mixer, or a mixing extruder in which the fluoropolymer is uniformly distributed throughout the host polymer. The fluoropolymer and the host polymer may be used in the form, for example, of a powder, a pellet, or a granular product. The mixing operation is most conveniently carried out at a temperature above the melting point or softening point of the fluoropolymer, though it is also feasible to dry-blend the components in the solid state as particulates and then cause uniform distribution of the components by feeding the dry blend to a twin-screw melt extruder.

The resulting melt-blended mixture can be pelletized or otherwise comminuted into a desired particulate size or size distribution and fed to an extruder, which typically will be a single-screw extruder, that melt-processes the blended mixture. Melt-processing typically is performed at a temperature from 180°C to 280°C, although optimum operating temperatures are selected depending upon the melting point, melt viscosity, and thermal stability of the blend. Different types of extruders that may be used to extrude the compositions of this invention are described, for example, by Rauwendaal, C., "Polymer Extrusion", Hansen Publishers, p. 23-48, 1986. The die design of an extruder can vary, depending on the desired extrudate to be fabricated. For example, an annular die can be used to extrude tubing, useful in making fuel line hose, such as that described in U. S. Pat. No. 5,284, 184 (Noone et al.).

The blended composition can contain conventional adjuvants such as antioxidants, antiblocks, pigments, and fillers, e. g. titanium dioxide, carbon black, and silica.

Antiblocks, when used, may be coated or uncoated materials.

The fluoropolymer may also be combined with a poly (oxyalkylene) polymer component as a so-called synergist. By 'synergist' is meant a compound, generally non-fluorinated organic compound, that allows the use of a lower amount of the fluoropolymer while achieving essentially the same improvement in extrusion and processing properties of the non-fluorinated polymer as if a higher amount of the fluoropolymer was used. The poly (oxyalkylene) polymer component may comprise one or more poly (oxyalkylene) polymers. A useful processing additive composition comprises between 5 and 95 weight percent of the poly (oxyalkylene) polymer component and 95 and 5 weight percent of the fluoropolymer. Typically, the ratio of the fluoropolymer to the poly (oxyalkylene) polymer component in the processing aid will be from 1/2 to 2/1.

The poly (oxyalkylene) polymer component generally may comprise between 0.002 and 20 weight percent of the overall melt processable composition, more preferably between 0.005 and 5 weight percent, and most preferably between 0.01 and 1 weight percent. Generally, poly (oxyalkylene) polymers useful in this invention include poly (oxyalkylene) polyols and their derivatives. A class of such poly (oxyalkylene) polymers may be represented by the general formula:

$$A[(OR^3)_xOR^2]_y$$

wherein: A is an active hydrogen-free residue of a low molecular weight, initiator organic compound having a plurality of active hydrogen atoms (e. g , 2 or 3), such as a polyhydroxyalkane or a polyether polyol, e. g., ethylene glycol, glycerol, 1,1,1-trimethylol propane, and poly (oxypropylene) glycol; y is 2 or 3 ;

$(OR^3)x$ is a poly (oxyalkylene) chain having a plurality of oxyalkylene groups, $OR^3$ wherein the $R^3$ moities can be the same or different and are selected from the group consisting of $C_1$ to $C_5$ alkylene radicals and, preferably, $C_2$ or $C_3$ alkylene radicals, and x is the number of oxyalkylene units in said chain. Said poly (oxyalkylene) chain can be a homopolymer chain, e. g. , poly (oxyethylene) or poly (oxypropylene), or can be a chain of randomly distributed (i. e., a heteric mixture) oxyalkylene groups, e. g., a copolymer - $OC_2H_4$- and -$OC_3H_6$- units, or can be a chain having alternating blocks or backbone segments of repeating oxyalkylene groups, e. g., a polymer comprising ($-OC_2H_4-)_a$ and ($-OC_3H_6-)_b$ blocks, wherein a+b = 5 to 5000 or higher, and preferably 10 to 500.

$R_2$ is H or an organic radical, such as alkyl, aryl, or a combination thereof such as aralkyl or alkaryl, and may contain oxygen or nitrogen heteroatoms. For example, $R_2$ can be methyl, butyl, phenyl, benzyl, and acyl groups such as acetyl, benzoyl and stearyl.

Representative poly (oxyalkylene) polymer derivatives can include poly (oxyalkylene) polyol derivatives wherein the terminal hydroxy groups have been partly or fully converted to ether derivatives, e. g., methoxy groups, or ester derivatives, e. g., stearate groups. Other useful poly (oxyalkylene) derivatives are polyesters, e. g., prepared from dicarboxylic acids and poly (oxyalkylene) glycols. Preferably, the major proportion of the poly (oxyalkylene) polymer derivative by weight will be the repeating oxyalkylene groups, $(OR_3)$.

The poly (oxyalkylene) polyols and their derivatives can be those which are solid at room temperature and have a molecular weight of at least 200 and preferably a molecular weight of 400 to 20,000 or higher. Poly (oxyalkylene) polyols useful in this invention include polyethylene glycols which can be represented by the formula $H(OC_2H_4)_nOH$, where n is about 15 to 3000, such as those sold under the Carbowax trademark, such as Carbowax™ PEG8000, where n is about 180, e.g. 181, and those sold under the trade name Polyox, such as Polyox ™ WSR N-10 where n is about 2300, e.g. 2272.

As an alternative to or in combination with a poly (alkyleneoxy) polymer, there can also be used any of the following polymers as synergists: i) silicone-polyether copolymers; ii) aliphatic polyesters such as poly (butylene adipate), poly (lactic acid) and polycaprolactone polyesters and iii) aromatic polyesters such as phthalic acid diisobutyl ester.

A preferred aliphatic polyester is a polycaprolactone having a number average molecular weight in the range 1000 to 32000, preferably 2000 to 10000, and most preferably 2000 to 4000.

The fluoropolymer composition is useful in the extrusion of non-fluorinated polymers, which includes for example, extrusion of films, extrusion blow molding, injection molding, pipe, wire and cable extrusion, and fiber production.

The following examples are offered to aid in a better understanding of the present invention. These examples are not to be construed as an exhaustive compilation of all embodiments of the present invention and are not to be unnecessarily construed as limiting the scope of this invention.

## EXAMPLES

Methods

*Melt flow index:*

The melt flow index (MF1) of the fluoropolymers, reported in g/10 min, was measured at a temperature of 265°C according to DIN EN ISO 1133 with a support weight of 5.0 kg. The MFI was obtained with a standardized extrusion die of 2.095 mm diameter and a length of 8.0 mm.

*Mooney viscosity:*

Mooney viscosities of amorphous fluoropolymers were measured according to ISO 289, Part 1 ("Determination of Mooney viscosity"). A Mooney MV2000 from Alpha Technologies was used. 40 g of air free raw polymer was placed into the large rotor geometry (Ø 38.10 mm; h=5.54 mm) and preheated at 121°C of 1 min. The numerical result reported in Mooney units (ML (1+10) @ 121°C) was taken after 10 min measuring time.

*Melting point:*

Melting peaks of the fluoropolymers were determined according to ASTM 4591 by means of Perkin-Elmer DSC 7.0 under nitrogen flow and a heating rate of 10°C/min. The indicated melting points relate to the melting peak maximum.

*Characterization of the shear melt rheology:*

Oscillatory shear flow measurements were conducted on fluoropolymer melts using a strain controlled ARES rheometer (Advanced Rheological Expansion System ; 3ARES-13; Firmware version 4.04.00) of Rheometric Scientific/TA Instruments (Alzenau, Germany) equipped with a 2KFRT 200 force rebalance transducer (supplied by RheoService, Reichelsheim, Germany) with a force range of up to 200 g. Dynamic mechanical data were recorded in nitrogen atmosphere in frequency sweep experiments using a 25 mm parallel plate geometry and a temperature of 265°C. The thermal control of the oven was operated using the sample/tool thermal element. A strain typically ascending from 1 to 20% was applied. Zero shear viscosities $\eta_0$, reported in Pa·s, were extrapolated from the viscosity function $\eta^*(\omega)$ using the 4 parameter *Carreau* fit function provided by the orchestrator software (version 7.0.8.13). The phase angle at gel point $\delta_c$, needed to evaluate the relaxation exponent $n$ ($n = \delta_c/90°$), is selected from the frequency where the the 1st derivative of $\delta(\omega)$ passes the maximum or the 2nd derivative passes zero. Alternatively, high viscosity samples ($\eta_0 > 1e5$ Pa.s) were characterized via stress relaxation experiments conducted with 10% strain. The zero shear viscosity was obtained by the stress relaxation integration procedure provided by the "Transforms" function of the orchestrator software.

*Characterization of the thermal stability:*

Thermal stability characterizations on fluoropolymer melts were conducted using the ARES rheometer described above. Dynamic mechanical data were recorded using a 25 mm parallel plate geometry. A nitrogen atmosphere at a temperature of 265°C, a constant frequency of 0.1 rad/s and 3% strain were applied. The complex viscosities are reported as a function of time in units of Pa*s.

*Particle size determination:*

The latex particle size determination was conducted by means of dynamic light scattering with a *Malvern Zetazizer 1000 HSA* in accordance to ISO/DIS 13321. The reported average particle size is the z-average. Prior to the measurements, the polymer latexes as yielded from the polymerisations were diluted with 0.001 mol/L KCI-solution, the measurement temperature was 20°C in all cases.

*Solution viscosities:*

Solution viscosities of diluted polymer solutions were determined on a 0.16% polymer solution in methylethylketone (MEK) at 35°C in accordance to DIN EN ISO 1628-1. A *Connon-Fenske-Routine-Viskosimeter* (Fa. Schott, Mainz/Germany) fulfilling ISO/DIS 3105 and ASTM D 2515 was used for the measurements, the *Hagenbach* correction was applied. The so-obtained reduced viscosities $\eta_{red.}$ were converted into the intrinsic viscosity $[\eta]$ using the *Huggins* equation ($\eta_{red.} = [\eta] + k_H \times [\eta]^2 \times c$) and a *Huggins* constant of $k_H = 0.34$. The long chain branching index LCBI was evaluated as described herein using the $[\eta]$ from solution viscosity and the $\eta_0$ from melt rheology investigation. The values a and k along with the test conditions for some of the fluoropolymers that may be used in the melt-processable polymer composition are set forth in the following table:

| Polymer | test condition | a-value | k-value |
|---|---|---|---|
| $TFE_{39}/HFP_{11}/VDF_{50}$ | A | 5.3 | $2.5 \times 10^{-7}$ |
| $TFE_{24.5}/HFP_{23}/VDF_{52.5}$ | A | 5.3 | $3.8 \times 10^{-7}$ |
| $VDF_{78}/HFP_{22}$ | A | 5.3 | $1.3 \times 10^{-7}$ |
| polyvinylidene fluoride | B | 5.3 | $1.2 \times 10^{-7}$ |
| polyvinylidene fluoride | C | 5.3 | $2.2 \times 10^{-7}$ |

In the above table, the indexes to the monomer units in the polymer indicate the amount of the respective unit in mole% and the test conditions are as follows:

A: shear viscosity at 265°C and the intrinsic viscosity in methyl ethyl ketone at 35°C
B: shear viscosity at 230°C and the intrinsic viscosity in dimethylformamide at 23°C
C: shear viscosity at 230°C and the intrinsic viscosity in dimethylformamide at 110°C.

It can be observed from the above table that the constant a appears to be independent of the fluoropolymer tested whereas the k-value varies with composition of the fluoropolymer and test condition used.

**Reference Example 1**

An oxygen free polymerization kettle with a total volume of 48.5 l equipped with an impeller agitator system was charged with 29 1 deionized water and heated up to 70° C. The agitation system was set to 240 rpm and the kettle was charged with 3.5 g dimethylether (Me$_2$O) and 1070 g hexafluoropropylene (HFP) to a pressure of 8.0 bar absolute and with 460 g vinylidenefluoride (VDF) to 15.5 bar absolute reaction pressure. In the following, 50 g of F$_2$C=CF-CF$_2$-O-(CF$_2$)$_6$-O-CF$_2$-CF=CF$_2$ (available from ANLES; St. Petersburg, Russia) was charged into the HFP storage cylinder and dispersed into 5300 g HFP under turbulent flow conditions. Then, the polymerization was initiated by the addition of 40 g aqueous ammonium peroxodisulfate (APS) dissolved into 120 ml water. As the reaction started, the reaction temperature was maintained and the reaction pressure of 15.5 bars absolute was also maintained by the feeding VDF and HFP into the gas phase with a feeding ratio HFP (kg)/VDF (kg) of 0.653. When a total feed of 8110 g VDF was reached in 220 min, the feed of the monomers was interrupted by closing the monomer valves. Within 10 minutes, the monomer gas phase was reacted down to a kettle pressure of 7.4 bars. Then the reactor was vented and flushed with

$N_2$ in three cycles. The so-obtained 42.5 kg polymer dispersion with a solid content of 32.9% was recovered at the bottom of the reactor. It consisted of latex particles having 360 nm in diameter according to dynamic light scattering and coagulum was discernibly not formed within the polymerisation.

1.0 L of this polymer dispersion was freeze-coagulated over night in a refrigerator. After thawing the material, the sponge-like raw polymer was washed five times with demineralised water. The polymer was squeezed out and dried for 12 h in an oven at 130°C. The polymer was translucent and did not show any signs of discoloration. It had the physical characteristics listed below:

| | |
|---|---|
| MFI (265/5) | 9.9 g/10 min |
| Mooney Viscosity ML (1+10) @ 121°C | 60.7 |
| Zero shear viscosity at 265°C | 1.2e4 Pa*s |
| Reduced viscosity (MEK @ 35°C) | 97 ml/g |
| Intrinsic viscosity (MEK @ 35°C) | 93 ml/g |
| LCBI | 0.26 |
| Phase angle | 47.5° |
| Relaxation exponent | 0.53 |

## Reference Example 2

The polymerization of example 1 was repeated except that 6 g of dimethylether was used instead of 3.5 g dimethylether and 50 g of $CF_2=CF-O-(CF_2)_3-O-CF=CF_2$ (available from ANLES; St. Petersburg, Russia) was used instead of $F_2C=CF-CF_2-O-(CF_2)_6-O-CF_2-CF=CF_2$. A latex dispersion was obtained having a particle diameter of 420 nm. The work-up procedure was carried out as described in example 1. The polymer had the physical characteristics as listed in the table below:

| | |
|---|---|
| MFI (265/5) | 0.8 g/10 min |
| ML (1+10) @ 121°C | 81.5 |
| Zero shear viscosity at 265°C | 5.9e6 Pa*s |
| Reduced viscosity (MEK @ 35°C) | 102 ml/g |
| Intrinsic viscosity (MEK @ 35°C) | 91 ml/g |
| LCBI | 3.15 |
| Phase angle | 43.0° |
| Relaxation exponent | 0.48 |

## Reference Example 3

The polymerization of example 2 was repeated using 10 g of dimethyl ether instead of 6 g of dimethylether, yielding a polymer having a greater Mooney viscosity. The physical characteristics of the so-obtained polymer are listed below:

| | |
|---|---|
| MFI (265/5) | 3.8g/10 min |
| ML (1+10) @ 121°C | 65.0 |
| Zero shear viscosity at 265°C | 2.6e5 Pa*s |
| Reduced viscosity (MEK @ 35°C) | 122 mUg |
| Intrinsic viscosity (MEK @ 35°C) | 115 ml/g |
| LCBI | 0.82 |
| Phase angle | 43.3° |
| Relaxation exponent | 0.48 |

## Reference Example 4

A semicrystalline $TFE_{39}/HFP_{11}/VDF_{50}$ terpolymer was prepared in the presence of $CF_2=CF-O-(CF_2)_3-O-CF=CF_2$.

The oxygen free polymerization kettle of example 1 was charged with 29 l deionized water and heated up to 60° C. The agitation system was set to 240 rpm and the kettle was charged with 250 g of a 30% aqueous solution of ammonium perfluoro octanoic acid (APFO), 2g oxalic acid and 12g ammonium oxalate. The kettle was then pressurized with ethane to 2.45 bar absolute, with 880 g hexafluoropropylene (HFP) to a pressure of 8.8 bar absolute, with 250 g vinylidenefluoride (VDF) to 13.0 bar absolute and with 390 g tetrafluoroethylene (TFE) to 16.8 bar absolute reaction pressure. In the following, 50 g of $CF_2=CF-O-(CF_2)_3-O-CF=CF_2$ (available from ANLES; St. Petersburg, Russia) was charged into the HFP storage cylinder and dispersed into 2800 g HFP under turbulent flow conditions as described in example 1. Then, the polymerization was initiated by the addition of 50 ml 0.6% wt. aqueous potassium permanganate solution. As the reaction starts, the reaction temperature was maintained and the reaction pressure of 16.8 bar absolute was maintained by feeding TFE, VDF and the blend of HFP and $CF_2=CF-O-(CF_2)_3-O-CF=CF_2$.

Into the gas phase with a feeding ratio VDF (kg)/TFE (kg) of 0.821 and monomer blend (kg)/TFE (kg) of 0.0.431. A total feed of 6500 g TFE was reached after 190 min and the feed of the monomers were interrupted by closing the monomer valves. After 10 minutes, the monomer gas phase had reacted down to a kettle pressure of 10.3 bars. Then the reactor was vented and flushed with $N_2$ in three cycles.

The thus obtained 43.7 kg polymer dispersion had a solid content of 33.7% and consisted of latex particles having 105 nm in diameter according to dynamic light scattering. The polymer dispersion was recovered from the bottom of the reactor and passed through a glass column containing DOWEX 650C cation exchange resin (Dow Chemical Co.). 8.8 l of the dispersion was transferred into a 20-l agglomeration vessel. 5 l of deionized water, 0.12 l concentrated hydrochloric acid and 1.8 l perfluoro n-heptane agglomeration aid (PF 5070, 3M) were added to the polymer dispersion. The agglomeration kettle was agitated vigorously until the solid had fully separated from the aqueous phase. The agglomerate was washed three times with deionized water. The agglomeration aid was distilled off and the polymer was dried in an oven at 80° C for 12 hours. The thus obtained polymer (2.9 kg) was readily soluble in MEK and showed the physical characteristics listed below:

| | |
|---|---|
| MFI (265/5) | 0.73 g/10 min |
| Melting point | 114°C |
| Zero shear viscosity at 265°C | 3.2e6 Pa*s |
| Reduced viscosity (MEK @ 35°C) | 63 ml/g |
| Intrinsic viscosity (MEK @ 35°C) | 61 ml/g |
| LCBI | 3.99 |
| Phase angle | 33.9° |
| Relaxation exponent | 0.38 |

**Reference Example 5**

The thermal stability of the fluoropolymer of example 3 was compared to the polymer of example 4 in WO2004/111124 using the thermal stability method described in the method section above. Both polymers had similar physical properties: the polymer of example 3 had an MFI (265/5) of 3.8 g/10 min and an LCBI of 0.82. The polymer of example 4 of WO2004/111124 had an MFI (265/5) of 1.9 g/10 min and an LCBI of 0.78. The results are shown in the table below. While the viscosity of the polymer of example 3 remains more or less constant, the viscosity of the polymer of example 4 of WO2004/111124 increases which is a sign of build-up or partial degradation of the original polymer.

| | Polymer of example 3 | Comparative polymer (polymer of example 4 of WO2004/111124 ) |
|---|---|---|
| Viscosity at t = 0 s [Pa*s] | 2.81e4 | 2.04 e4 |
| Viscosity at t = 320 s [Pa*s] | 2.84e4 | 2.06 e4 |
| Viscosity at t = 1000 s [Pa*s] | 2.91 e4 | 2.21e4 |
| Viscosity at t = 3200 s [Pa*s] | 3.07e4 | 2.53e4 |
| Viscosity at t = 10000 s [Pa*s] | 3.10e4 | 2.66e4 |
| Viscosity at t = 32000 s [Pa*s] | 2.93e4 | 3.09e4 |

**Example 6 (according to the invention)**

In a first step, the fluoropolymers of reference examples 1-3 were blended with polyethylene glycol (PEG) in a ratio 1:2. For evaluation in a blown film line, additive concentrates of fluoropolymer or fluoropolymer and PEG were prepared at a level of 3 % in ExxonMobil 5002.09 LLDPE, which was stabilized with 1000 ppm Irganox™ 1076 and 1000 ppm Irgafos™ 168 (both available from Ciba Specialty Chemicals) and 700 ppm of Zinc Stearate. The concentrates were compounded using a Haake Rheomix™ TW-100 counterrotating, intermeshing, conical twin screw extruder. Prior to compounding, the resin, antioxidants stearate, fluoropolymer, and PEG additive were dry-blended in a pail tumbler. This powder blend was fed to the compounding extruder. The extruder was operating at 150 rpm, with an extrusion profile of 190°/190°/200°C and die temp of 200°C. The extrudate was water quenched and strand pelleted. The resulting pellets were collected in a plastic one gallon container, hand mixed by shaking, and passed through the extruder a second time to ensure adequate dispersion and distribution of the fluoropolymer within MB resin.

Films were produced using a Kiefel blown film line with a 40 mm, 24/1: L/D, grooved feed extruder. The die was of spiral design, with a diameter of 40 mm and a die gap of 1.2 mm. An adjustable single lip air ring with chilled air was used for cooling. An iris and sizing cage provided further bubble stability. Film was produced with a nominal gauge of 25 microns.

The Kiefel extruder two first zones were set at 135°C, and 190°C. The last extruder zone and the die zones were set at 210°C. The die adapter zone was adjusted in the range of 210° to 220°C to maintain a target melt temperature of 210°C. The screw was maintained at about 53 rpm to deliver an output of about 18 kg/hr corresponding to a shear rate of about 220 s$^{-1}$. The film winder was set at 20 m/min.

Prior to each evaluation it was necessary to ensure that the blown film line was free of residual fluoropolymer from the previous evaluation. This was accomplished by extruding approximately 9 kg of purge resin, Polybatch KC-15 (available from A. Schulman). The base resin was then extruded into film, under the original conditions for a minimum of one hour, until the previously determined extrusion pressure was achieved and the resultant film was fully melt-fractured.

Samples for extrusion were prepared by weighing the required amount of fluoropolymer additive concentrate, pelleted resin and other additive concentrates into a 5 gallon pail and mixing on a pail tumbler for a minimum of 10 minutes. The fluoropolymer additive concentrates used in the following examples were produced as described above using the Haake twin screw extruder.

The polyolefin used for the test was a commercially available butene modified linear low density polyethylene (LLDPE from ChevronPhillips) with MFI (190/2.16) of 0.9 g/10' (host resin). The formulation included 1500 ppm of Erucamide (5% additive concentrate 10090 available from Ampacet) and 7500 ppm of antiblock (ABT 2500, 60% additive concentrate 101558 available from Ampacet). Sufficient tumbling provided the blending of the LLDPE host resin with the LLDPE carrier resin, the so-obtained concentration of the PPA in the LLDPE was 400 ppm, 600 ppm or 800 ppm, during the test sequence.

The percent melt fracture was determined by taking a section of the film lay flat, opening it along the edge, measuring the individual bands (regions) of melt fracture in the transverse direction of the film, summing their total, and then dividing by the total width of the opened lay flat film.

For each sample tested, once the baseline for the host resin was established, the resin containing 400 ppm PPA (blend resin, host resin and additive concentrates) was charged to the extruder and the time was recorded. At 10 minutes intervals a film sample was taken and inspected visually in terms of melt fracture elimination (% MF) until the film was free of MF. If melt fracture was reduced to 0 percent within 60 minutes, the data point was complete. If not, the PPA level was increased to 600 ppm and the process was repeated for another 60 minutes. If melt fracture was reduced to 0 percent within that time, the data point was complete. If not, the PPA level was increased to 800 ppm and the process was repeated for another final 60 minutes. The final level and total time to reach 0% melt fracture (180 min maximum) was recorded. If the melt fracture was not eliminated within the 180 min of the test, the residual level of MF (%) was recorded. The results are shown in the table below.

| Time (min) | PPA Conc (ppm) | Ex-1 (61 ML) | Ex-2 (65 ML) | Ex-3 (82 ML) |
|---|---|---|---|---|
| | | Melt fracture (%) | Melt fracture (%) | Melt fracture (%) |
| 0 | 400 | 100 | 100 | 100 |
| 10 | 400 | 100 | 98 | 100 |
| 20 | 400 | 100 | 12 | 99 |
| 30 | 400 | 98 | 0.5 | 89 |

(continued)

| Time (min) | PPA Conc (ppm) | Ex-1 (61 ML) | Ex-2 (65 ML) | Ex-3 (82 ML) |
| --- | --- | --- | --- | --- |
| | | Melt fracture (%) | Melt fracture (%) | Melt fracture (%) |
| 40 | 400 | 88 | 0 | 31 |
| 50 | 400 | 80 | | 11 |
| 60 | 600 | 62 | | 2 |
| 70 | 600 | 40 | | 0.2 |
| 80 | 600 | 30 | | 0 |
| 90 | 600 | 16 | | |
| 100 | 600 | 8 | | |
| 110 | 600 | 3 | | |
| 120 | 600 | 0 | | |
| Exact time to 0% MF (min) | | 115 | 33 | 73 |

### Example 7 (according to the invention)

Example 6 was repeated using the fluoropolymer of reference example 4 without blending it with PEG and comparing it with a masterbatch (C-1) containing a similar fluoropolymer having no long chain branches, i.e. an LCBI of 0 but containing PEG. The masterbatch (C-1) was commercially available from Ampacet, Tarrytown, NY, USA, and contained 3%wt. fluoropolymer.

The results are shown in the table below.

| Time (min) | PPA Conc (ppm) | C-1 | Ex-4 |
| --- | --- | --- | --- |
| | | % melt fracture | % melt fracture |
| 0 | 400 | 100 | 100 |
| 10 | 400 | 100 | 100 |
| 20 | 400 | 100 | 98 |
| 30 | 400 | 100 | 90 |
| 40 | 400 | 100 | 45 |
| 50 | 400 | 99 | 26 |
| 60 | 600 | 97 | 20 |
| 70 | 600 | 89 | 16 |
| 80 | 600 | 82 | 15 |
| 90 | 600 | 69 | 12 |
| 100 | 600 | 37 | 10 |
| 110 | 600 | 34 | 6 |
| 120 | 600 | 25 | 4 |
| 130 | 800 | 24 | 3 |
| 140 | 800 | 20 | 2 |
| 150 | 800 | 20 | 0.5 |
| 160 | 800 | 15 | 0.3 |
| 170 | 800 | 15 | 0 |

(continued)

| Time (min) | PPA Conc (ppm) | C-1 | Ex-4 |
|---|---|---|---|
| | | % melt fracture | % melt fracture |
| 180 | 800 | 11 | |
| | | | |
| Exact time to 0% MF (min) | | >180 | 170 |

## Claims

1. A polymer composition comprising at least one non-fluorinated polymer that is suitable for melt-processing and at least one fluorinated polymer that is suitable for melt-processing, wherein the fluorinated polymer is obtainable by polymerizing one or more fluorinated monoolefin monomers in the presence of one or more fluorinated bisolefinic ethers of the general formula

$$CR_1R_2=CF-O-Rf_1-O-CF=CR_3R_4 \qquad (I),$$

$$CR_1R_2=CF-CF_2-O-Rf_1-O-CF_2-CF=CR_3R_4 \qquad (II),$$

or

$$CR_1R_2=CF-CF_2-O-Rf_1-O-CF=CR_3R_4 \qquad (III)$$

wherein

$R_1$, $R_2$, $R_3$ and $R_4$ are independently selected from F, H, alkyl, alkoxy, polyoxy alkyl, perfluoroalkyl, perfluoro-alkoxy or perfluoropolyoxy alkyl;
$Rf_1$ represents a residue selected from perfluoroalkyl, perfluoroalkoxy or perfluoropolyoxy alkyl or a residue according to $Rf_2$;
$Rf_2$ represents a non-fluorinated aryl, a fluorinated aryl or a perfluorinated aryl.

2. The polymer composition of claim 1 wherein $Rf_1$ represents a perfluoroalkyl, perfluoroalkoxy or a perfluoropolyoxy alkyl residue having from 1 to 10 carbon atoms.

3. The polymer composition of any one of the preceding claims wherein $R_1$, $R_2$, $R_3$, and $R_4$ are independently selected from F, H, $CF_3$, $C_2F_5$, $C_3F_7$, $C_4F_9$, $CH_3$, $C_2H_5$, $C_3H_7$, $C_4H_9$.

4. The composition of any one of the preceding claims, wherein the fluorinated polymer has a long chain branch index (LCBI) of from 0.2 to 5 determined as described in R.N. Shroff, H. Mavridis; Macromol., **32**, 8454-8464 (1999) & **34**, 7362-7367 (2001).

5. The composition according to any one of the preceding claims wherein the fluorinated polymer comprises repeating units derived from at least one non-halogenated olefin monomer selected from ethylene, propylene or a combination thereof.

6. The composition according to any one of the preceding claims wherein the fluorinated polymer is amorphous.

7. The composition according to any one of the preceding claims wherein the fluorinated polymer has a melting point of greater than 100°C and less than 320°C.

8. The composition according to any one of the preceding claims wherein the fluorinated polymer is derived from up to 1 % wt. of fluorinated bisolefinic ether based on the total weight of the fluorinated monoolefin monomers.

9. The composition according to any one of the preceding claims comprising from to 2 to 50% wt. of fluorinated polymer based on the total weight of the composition.

10. The composition according to any one of the preceding claims comprising from 0.002 to 2 % wt. of fluorinated polymer based on the total weight of the composition.

11. A method for making a polymer composition that is suitable for melt processing by blending (a) a non-fluorinated melt processable polymer and (b) a fluorinated polymer as defined in any one of claims 1 to 8.

12. A method for melt-extruding a non-fluorinated polymer that is suitable for melt-processing by adding to the polymer a fluorinated polymer as defined in any one of claims 1 to 8, wherein the fluorinated polymer is added to the non-fluorinated polymer prior or during the melt extrusion.

13. Use of a fluorinated polymer as defined in any one of claims 1 to 8 as an additive in the melt-extrusion of a non-fluorinated polymer that is suitable for melt-processing.

14. An article comprising the fluorinated polymer according to any one of claims 1 to 8 and at least one fluorinated polymer.

15. The article according to claim 14 wherein the article is selected from melt-extruded articles, blow-molded articles or injection-molded articles.

**Patentansprüche**

1. Polymerzusammensetzung, umfassend mindestens ein nichtfluoriertes Polymer, das zum Schmelzverarbeiten geeignet ist, und mindestens ein fluoriertes Polymer, das zum Schmelzverarbeiten geeignet ist, wobei das fluorierte Polymer durch Polymerisieren eines oder mehrerer fluorierter Monoolefinmonomere in Gegenwart eines oder mehrer fluorierter bisolefinischer Ether der allgemeinen Formel

$$CR_1R_2=CF-O-Rf_1-O-CF=CR_3R_4 \qquad (I),$$

$$CR_1R_2=CF-CF_2-O-Rf_1-O-CF_2-CF=CR_3R_4 \qquad (II)$$

oder

$$CR_1R_2=CF-CF_2-O-Rf_1-O-CF=CR_3R_4 \qquad (III)$$

erhältlich ist, wobei

$R_1$, $R_2$, $R_3$ und $R_4$ unabhängig unter F, H, Alkyl, Alkoxy, Polyoxyalkyl, Perfluoralkyl, Perfluoralkoxy oder Perfluorpolyoxyalkyl ausgewählt werden;
$Rf_1$ einen Rest darstellt, ausgewählt unter Perfluoralkyl, Perfluoralkoxy oder Perfluorpolyoxyalkyl oder einem Rest gemäß $Rf_2$;
$Rf_2$ ein nichtfluoriertes Aryl, ein fluoriertes Aryl oder ein perfluoriertes Aryl darstellt.

2. Polymerzusammensetzung nach Anspruch 1, wobei $Rf_1$ einen Perfluoralkyl-, Perfluoralkoxy- oder einen Perfluorpolyoxyalkylrest darstellt, der 1 bis 10 Kohlenstoffatome aufweist.

3. Polymerzusammensetzung nach einem der vorhergehenden Ansprüche, wobei $R_1$, $R_2$, $R_3$ und $R_4$ unabhängig unter F, H, $CF_3$, $C_2F_5$, $C_3F_7$, $C_4F_9$, $CH_3$, $C_2H_5$, $C_3H_7$, $C_4H_9$ ausgewählt sind.

4. Zusammensetzung nach einem der vorhergehenden Ansprüche, wobei das fluorierte Polymer einen Langkettenverzweigungsindex (LCBI) von 0,2 bis 5 aufweist, wie bei R. N. Shroff, H. Maoridis; Macromol, 32, 8454-8464 (1999) und 34, 7362-7367 (2001) beschrieben, bestimmt.

5. Zusammensetzung nach einem der vorhergehenden Ansprüche, wobei das fluorierte Polymer Wiederholungseinheiten umfasst, die aus mindestens einem nichthalogenierten Olefinmonomer abgeleitet sind, das unter Ethylen, Propylen oder einer Kombination davon ausgewählt ist.

6. Zusammensetzung nach einem der vorhergehenden Ansprüche, wobei das fluorierte Polymer amorph ist.

**7.** Zusammensetzung nach einem der vorhergehenden Ansprüche, wobei das fluorierte Polymer einen Schmelzpunkt von mehr als 100 °C und weniger als 320 °C aufweist.

**8.** Zusammensetzung nach einem der vorhergehenden Ansprüche, wobei das fluorierte Polymer von bis zu 1 Gew.-% fluoriertem bisolefinischem Ether, auf das Gesamtgewicht der fluorierten Monoolefinmonomere bezogen, abgeleitet ist.

**9.** Zusammensetzung nach einem der vorhergehenden Ansprüche, umfassend 2 bis 50 Gew.-% fluoriertes Polymer, auf das Gesamtgewicht der Zusammensetzung bezogen.

**10.** Zusammensetzung nach einem der vorhergehenden Ansprüche, umfassend 0,002 bis 2 Gew.-% fluoriertes Polymer, auf das Gesamtgewicht der Zusammensetzung bezogen.

**11.** Verfahren zum Herstellen einer Polymerzusammensetzung, die für das Schmelzverarbeiten geeignet ist, durch Mischen (a) eines nichtfluorierten schmelzverarbeitbaren Polymers und (b) eines fluorierten Polymers, wie in einem der Ansprüche 1 bis 8 definiert.

**12.** Verfahren zum Schmelzextrudieren eines nichtfluorierten Polymers, das für das Schmelzverarbeiten geeignet ist, durch Hinzusetzen eines fluorierten Polymers zu dem Polymer, wie in einem der Ansprüche 1 bis 8 definiert, wobei das fluorierte Polymer dem nichtfluorierten Polymer vor oder während der Schmelzextrusion hinzugesetzt wird.

**13.** Verwendung eines fluorierten Polymers, wie in einem der Ansprüche 1 bis 8 definiert, als Zusatzmittel bei der Schmelzextrusion eines nichtfluorierten Polymers, das für das Schmelzverarbeiten geeignet ist.

**14.** Artikel, umfassend das fluorierte Polymer nach einem der Ansprüche 1 bis 8 und mindestens ein fluoriertes Polymer.

**15.** Artikel nach Anspruch 14, wobei der Artikel ausgewählt ist unter schmelzextrudierten Artikeln, blasgeformten Artikeln oder spritzgeformten Artikeln.

**Revendications**

**1.** Composition polymère comprenant au moins un polymère non fluoré qui est approprié pour la transformation à l'état fondu et au moins un polymère fluoré qui est approprié pour la transformation à l'état fondu, dans laquelle le polymère fluoré peut être obtenu par polymérisation d'un ou plusieurs monomères monooléfiniques fluorés en présence d'un ou plusieurs éthers bisoléfiniques fluorés représentés par la formule générale

$$CR_1R_2=CF\text{-}O\text{-}Rf_1\text{-}O\text{-}CF=CR_3R_4 \qquad (I),$$

$$CR_1R_2=CF\text{-}CF_2\text{-}O\text{-}Rf_1\text{-}O\text{-}CF_2\text{-}CF=CR_3R_4 \qquad (II)$$

ou

$$CR_1R_2=CF\text{-}CF_2\text{-}O\text{-}Rf_1\text{-}O\text{-}CF=CR_3R_4 \qquad (III)$$

dans lesquelles

$R_1$, $R_2$, $R_3$ et $R_4$ sont chacun indépendamment choisis parmi F, H ou un alkyle, alcoxy, polyoxyalkyle, perfluoroalkyle, perfluoroalcoxy ou perfluoropolyoxyalkyle ;
$Rf_1$ représente un résidu choisi parmi un perfluoroalkyle, perfluoroalcoxy ou perfluoropolyoxyalkyle ou un résidu selon $Rf_2$;
$Rf_2$ représente un aryle non fluoré, un aryle fluoré ou un aryle perfluoré.

**2.** Composition polymère selon la revendication 1 dans laquelle $Rf_1$ représente un résidu perfluoroalkyle, perfluoroalcoxy ou perfluoropolyoxyalkyle ayant de 1 à 10 atomes de carbone.

**3.** Composition polymère selon l'une quelconque des revendications précédentes dans laquelle $R_1$, $R_2$, $R_3$ et $R_4$ sont chacun indépendamment choisis parmi F, H, $CF_3$, $C_2F_5$, $C_3F_7$, $C_4F_9$, $CH_3$, $C_2H_5$, $C_3H_7$ et $C_4H_9$.

**4.** Composition selon l'une quelconque des revendications précédentes dans laquelle le polymère fluoré a un indice de ramification à longue chaîne (LCBI) de 0,2 à 5 déterminé comme décrit dans les documents de R. N. Shroff et H. Mavridis ; *Macromol.*, **32**, 8454-8464 (1999) et **34**, 7362-7367 (2001).

**5.** Composition selon l'une quelconque des revendications précédentes dans laquelle le polymère fluoré comprend des motifs répétés dérivés d'au moins un monomère oléfinique non halogéné choisi parmi l'éthylène, le propylène ou une association de ceux-ci.

**6.** Composition selon l'une quelconque des revendications précédentes dans laquelle le polymère fluoré est amorphe.

**7.** Composition selon l'une quelconque des revendications précédentes dans laquelle le polymère fluoré a un point de fusion supérieur à 100 °C et inférieur à 320°C.

**8.** Composition selon l'une quelconque des revendications précédentes dans laquelle le polymère fluoré est dérivé de jusqu'à 1 % en poids d'éther bisoléfinique fluoré sur la base du poids total des monomères monooléfiniques fluorés.

**9.** Composition selon l'une quelconque des revendications précédentes comprenant de 2 à 50 % en poids de polymère fluoré sur la base du poids total de la composition.

**10.** Composition selon l'une quelconque des revendications précédentes comprenant de 0,002 à 2 % en poids de polymère fluoré sur la base du poids total de la composition.

**11.** Procédé pour la fabrication d'une composition polymère qui est appropriée pour la transformation à l'état fondu par mélange de (a) un polymère non fluoré transformable à l'état fondu et (b) un polymère fluoré tel que défini dans l'une quelconque des revendications 1 à 8.

**12.** Procédé pour l'extrusion à l'état fondu d'un polymère non fluoré qui est approprié pour la transformation à l'état fondu par ajout au polymère d'un polymère fluoré tel que défini dans l'une quelconque des revendications 1 à 8, dans lequel le polymère fluoré est ajouté au polymère non fluoré avant ou pendant l'extrusion à l'état fondu.

**13.** Utilisation d'un polymère fluoré tel que défini dans l'une quelconque des revendications 1 à 8 comme additif dans l'extrusion à l'état fondu d'un polymère non fluoré qui est approprié pour la transformation à l'état fondu.

**14.** Article comprenant le polymère fluoré selon l'une quelconque des revendications 1 à 8 et au moins un polymère fluoré.

**15.** Article selon la revendication 14, l'article étant choisi parmi les articles extrudés à l'état fondu, les articlés moulés par soufflage ou les articles moulés par injection.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5015693 A
- US 4855013 A, Duchesne and Jonson
- US 5701217 A, Blong
- US 6277919 A, Dillon
- WO 2002066544 A
- WO 2004111124 A
- US 4558141 A, Squires
- US 4273728 A, C. Krespan
- US 3326984 A, Anderson
- EP 0976706 A, Navarrini
- US 20070015937 A, Hintzer
- EP 1189953 A, Hintzer
- US 5284184 A, Noone

### Non-patent literature cited in the description

- Melt Extrusion. **R. F. WESTOVER.** Encyclopedia of Polymer Science and Technology. John Wiley & Sons, 1968, vol. 8, 573-81
- **A. RUDIN et al.** Fluorocarbon Elastomer Aids Polyolefin Extrusion. *Plastics Engineering,* March 1986, 63-66
- **R. N. SHROFF ; H. MAVRIDIS.** *Macromol.,* 1999, vol. 32, 8454-8464
- *MACROMOL.,* 2001, vol. 34, 7362-7367
- **WOOD-ADAMS et al.** *Macromolecules,* 2000, vol. 33 (20), 7489-7499
- **STANGE et al.** *Macromolecules,* 2007, vol. 40, 2409-2416
- **GARCIA-FRANCO et al.** *Macromolecules,* 2001, vol. 34 (10), 3115-3117
- **M. PAHL ; W.GLEIßLE ; H. LAUN.** Praktische Rheologie der Kunststoffe und Elastomere. VDI Verlag, 1995, 256
- **RAUWENDAAL, C.** Polymer Extrusion. Hansen Publishers, 1986, 23-48